Europäisches Patentamt

European Patent Office

Office européen des brevets

(11) Publication number: **0 337 666**
**A2**

## (12) EUROPEAN PATENT APPLICATION

(21) Application number: **89303421.5**

(22) Date of filing: **06.04.89**

(51) Int. Cl.4: **G01N 1/28**

(30) Priority: **12.04.88 US 180732**

(43) Date of publication of application:
**18.10.89 Bulletin 89/42**

(84) Designated Contracting States:
**DE FR GB IT NL**

(71) Applicant: **VARIAN ASSOCIATES, INC.**
**611 Hansen Way**
**Palo Alto, CA 94303(US)**

(72) Inventor: **Arnold, James T.**
**778 Blanchard Way**
**Sunnyvale California 94087(US)**

(74) Representative: **Cline, Roger Ledlie et al**
**EDWARD EVANS & CO. Chancery House**
**53-64 Chancery Lane**
**London WC2A 1SD(GB)**

(54) **Fluid sample accumulator.**

(57) Sample molecules are captured from a carrier fluid on the sufaces of passages in a heater. A first volume of carrier fluid is pumped in a first direction through the passages and then a second volume less than the first is pumped through the passages during a subsequent period. The surfaces are controllably heated to a selected temperature during the subsequent period to release the captured sample molecules. In one example the passages are defined between glass cylinders sandwiched between the turns of the metal foil spiral forming the heater. The second volume is preferably pumped in the reverse direction to the first.

FIG. 1

# FLUID SAMPLE ACCUMULATOR

This invention relates to apparatus and methods for producing a fluid having an increased concentration of sample molecules from a carrier fluid containing sample molecules dispersed therein.

The detection of trace concentrations of molecules of sample material dispersed in large volumes of carrier fluids presents severe demands on detection equipment, both in sensitivity and in dynamic range. The desirability of some method of pre-concentration has been recognized for many years. One example of a prior art method is a subtractive method of the membrane separator invented by Llewellyn. See for example, U.S. Patent No. 3,398,505 issued to Llewellyn on August 27, 1968 and assigned to the assignee of the present invention. This separator operates on the principle of preferential exclusion of an undesired carrier fluid from transmission to its output in comparison to relative preferential transfer of the desired sample molecules.

A sample accumulator is disclosed which includes a heater having passages for fluid extending through the heater. The surfaces of the passages act as a chromatographic stationary phase for capturing sample molecules from a carrier fluid. "Stationary phase" is a term derived from the art of chromatography. Chromatography concerns the utilization of migration of sample materials at differing rates through an analyzing region for the purpose of distinguishing sample material species.

The migration takes place in response to a physical process, such as the driving of a fluid through the analyzing region. Sample materials are literally transported by the fluid which is described as the moving phase. The selective migration rate of the sample material is always less than the rate of motion of the moving phase and varies with the sample material. This variation comes about because the sample material becomes attached (for short periods) to surfaces in the structure comprising the analyzing region. The longer the attachment period, the slower the migration, and hence, the separation of sample materials with differing average attachment periods.

The surfaces may comprise simply the structure of the analyzing region which is stationary relative to the fluid flow mentioned, or may comprise coatings on the structure that are bound thereto and therefore stationary. The coatings, for example, may be solvents that can take up sample materials with variable preference giving the effect of the variable attachment times mentioned. The coatings are mechanically attached to the structure and thus stationary.

Hence, the term stationary phase refers to the medium mechanically attached to a stationary structure (or the structure itself) that can capture a sample temporarily from a moving medium and delay its delivery selectively according to its material characteristic.

In some embodiments of the sample accumulator of the present invention, the carrier fluid is a gas; in other embodiments, the carrier fluid is a liquid.

The sample accumulator includes pumping means for pumping a first volume, $V_1$, of carrier fluid through the heater passages during a first, accumulation period of a cycle during which sample molecules are captured by the stationary phase. During a second, harvesting period, the pumping means pumps a second volume of fluid, $V_2$ less than $V_1$, through the heater. During the harvesting period, a control means operates so that the heater passages are heated to a selected temperature for driving the sample molecules captured during the accumulation period back into the fluid. The fluid thus enriched with sample molecules is provided to a chemical analyzer for identifying sample species.

In some embodiments, the direction of fluid flow through the heater passages during the harvesting period is opposite to that obtaining during the accumulation period.

In one embodiment, the heater includes a conductive metallic rectangular foil wrapped in a spiral, the turns of the spiral being separated by insulating rods. By making the rods and foil thin, a heater having a large surface area contained in a small volume is provided which has a very short thermal time constant. The surfaces of the conductive metal foil and of the insulating rods may act as chromatographic stationary phases. If desired, these surfaces may be coated with another selected stationary phase to increase the selective capture by the stationary phase of the sample molecules in preference to the carrier molecules.

If desired, both the carrier fluid and the fluid used during the harvesting cycle may be preconditioned to a selected temperature.

A method of concentrating sample molecules is also described which includes pumping a first volume of carrier fluid through passages of a heater whose surfaces act as chromatographic stationary phases in a first period of a cycle and then pumping a second volume of fluid less than the first volume through the heater passages during a second period of the cycle in order to harvest the sample molecules captured during the first period. During the harvesting period, the heater is heated to a selected temperature to drive the captured sample molecules into the fluid.

Brief Description of the Drawings

FIG. 1 shows a partial cross-section of one embodiment of fluid sample accumulator 1 of the present invention;

FIG. 2 shows a partially schematic cross-section of the embodiment of FIG. 1 along a plane perpendicular to the plane of FIG. 1;

FIG. 3 shows a partially cut away perspective view of an alternate embodiment of the fluid sample accumulator of the present invention;

FIG. 4 shows a cross-section of the embodiment of FIG. 3 along the line 4-4;

FIG. 5 shows another alternate embodiment of the sample accumulator;

FIG. 6 shows a schematic diagram of a chemical analyzing apparatus including the sample accumulator;

FIG. 7 shows a longitudinal channel through heating element 3B;

FIG. 8 shows an embodiment of the system in FIG. 6 in which the accumulator housing is movable and has two openings; and

FIG. 9 shows an embodiment of the system in FIG. 6 having means for forward flow during the harvesting period.

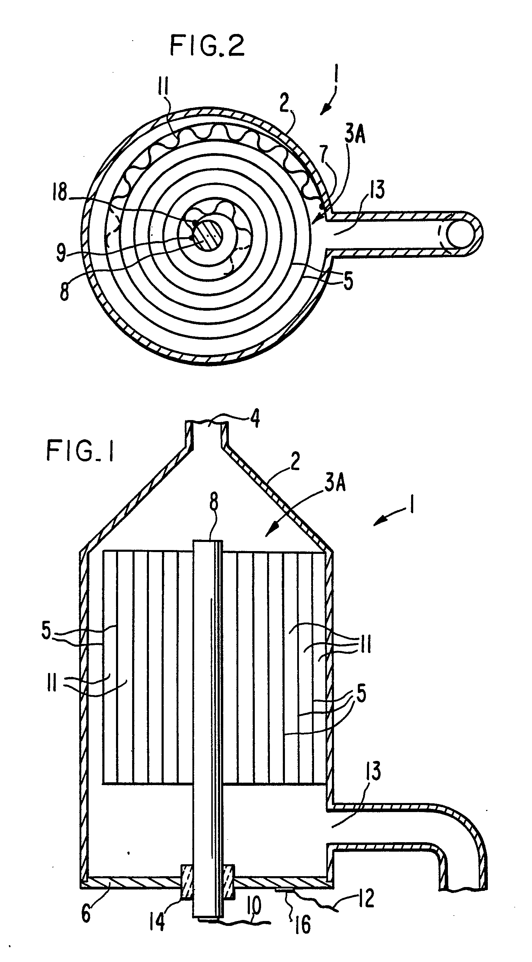

FIG. 1 shows a partial cross-section of one embodiment of fluid sample accumulator 1 of the present invention.

FIG. 2 shows a partially schematic cross-section of the embodiment of FIG. 1 along a plane perpendicular to the plane of FIG. 1.

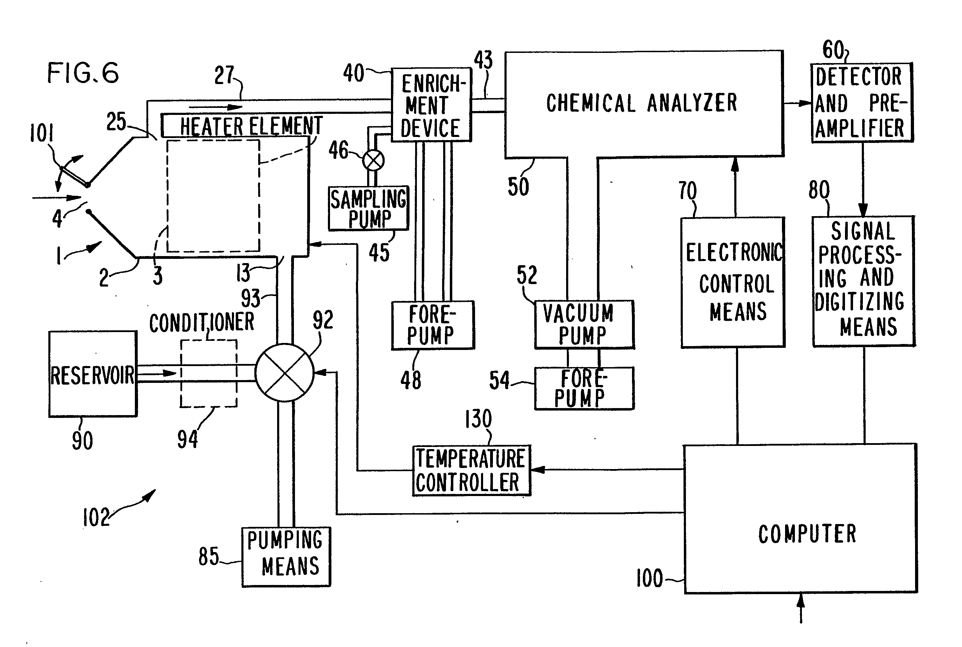

Fluid sample accumulator includes housing 2 having an inlet opening 4 for receiving a carrier fluid including molecules of sample material dispersed therein and at least one outlet opening 13. The carrier fluid may be selected to be either liquid(s) or gas(es), for example, water or air. In one embodiment housing 2, including end plate 6, is made of stainless steel. Housing 2 contains a heating element 3A comprising corrugated ribbon heater foil 11, a high temperature insulating spacer 5, and support rod 8. Center support and electrically conductive rod 8 extends through end plate 6 of housing 2 and is electrically insulated from end plate 6 by electrical insulator 14. One terminal of a low voltage, e.g., 3 to 100 volts, power supply (not shown) is connectable to support rod 8 via lead 10 and temperature controller 130 (shown in FIG. 6). The other terminal of the power supply is connected to terminal 16 on end plate 2 by means of lead 12 and temperature controller 130.

As shown in FIG. 2, one end of corrugated ribbon heater foil 11 is electrically connected to conductive support rod 8, for example, by spot welding along line 9 parallel to the axis of rod 8. Insulating spacer 5, which may be made, for example, of vitreous silica or glass, terminates at central support rod 8 along line 18 parallel to line 9. Both corrugated ribbon heater 11 and insulating spacer 5 wind around central support rod 8 so that they spiral out therefrom as shown in FIG. 2. If spacer 5 is thin glass or silica, it may be bent around central support rod 8 as shown in FIG. 1. The other end of corrugated ribbon heater foil 11 is electrically connected to housing 2 at terminal 7 on housing 2, which is electrically connected to terminal 16 via housing 2. If desired, housing 2 may be made of a nonconductive material, e.g. ceramic, and then an electrical connection, not shown, is provided between heating element terminal 7 and terminal 16.

Corrugated ribbon heater foil 11 may be made of a conductive metal, e.g. stainless steel or nichrome, or other material heatable by an electric current flowing therethrough. Foil 11 is dimensioned so that it is rapidly heatable by an electric current flowing therethrough. It is preferred that the thermal time constant of heating element 3 be less than one second.

In one embodiment, foil 11 and spacer 5 have a thickness in the range of 0.00064 to 0.0127 cms. Foil 11 has a height of 3.8 cms, and a length in the range of 91 to 122 cms prior to corrugation. In this embodiment cylindrical housing 2 has a diameter of approximately 3.8 cms.

It is preferred that foil 11 and high temperature insulating spacer 5 have stable surfaces, i.e. surfaces that do not corrode and whose surface properties do not change with time. It is also preferred that both foil 11 and insulating spacer 5 be chemically inert so that they do not react chemically with the carrier or sample fluids.

If desired, the surfaces of foil 11 and insulating spacer 5 may be plated or coated with a selected material having an affinity for sample material in the carrier fluid. For example, foil 11 may be coated with silver or gold, which have affinity for some sample materials, or with silica, alumina or carbon or any of the other stationary phases (including liquid solvents) used in gas or liquid chromatography. See, for example, McNair and Bonelli, Basic Gas Chromatography, Lithographed by Consolidated Printers, Berkeley, CA (5th Ed., 1969); see also Snyder and Kirkland, Introduction to Modern Liquid Chromatography, Second edition, John Wiley & Sons, Inc., New York (1979), in particular, see pages 247-250, which are incorporated herein by reference; Littlewood, Gas Chromatography, Academic Press, New York (1962), in particular, see pages 92-95, which are incorporated herein by reference. The conductive metal of foil 11 and the glass spacer 5 may act as stationary phases, since the surfaces of all materials, and in particular the metal foil and spacer may contain active sites that can capture sample molecules. Alternatively, coatings may be provided on the foil and spacer to act as stationary phase according to well known art.

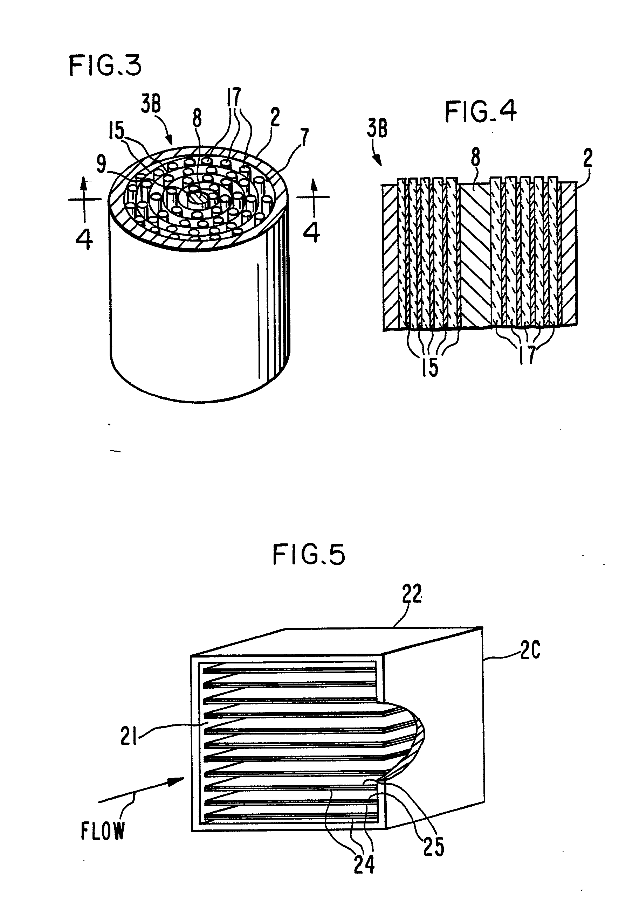

FIG. 3 shows housing 2 and an alternate preferred embodiment 3B for the heating element 3 contained within housing 2. FIG. 4 shows a cross-section of the heating element 3B of FIG. 3 along the line 4-4.

Heating element 3B shown in FIG. 3 includes electrically conductive central support rod 8 which is electrically connected to spiral heater foil 15. Spiral heater foil 15, made of the same materials as foil 11, is approximately 0.0013 cms thick and spirals outward to terminal 7 on housing 2. If the foil material is nichrome, it is convenient to use a thickness of about 0.0013 cms so that a power supply of 1-30 volts will accommodate the heating needs. This is also thin enough for rapid heating and cooling. Foil 11 has a height of approximately 3.8 cms and a length of approximately 91 cms. As in the previous embodiments, terminal 7 is electrically connected to terminal 12 (not shown in FIG. 3) and lead 10 is connected to electrically conductive support rod 8. The turns of the spiral are separated by electrically insulating rods 17. Rods 17 are chemically inert with respect to the carrier fluids and sample material, and are typically made of a high temperature insulating material, for example, vitreous silica or glass. High performance plastics such as polyimide or PTFE may be used when very high temperatures are not required.

Rods 17 typically have a selected diameter in a range between 0.005 and 0.015 cms and are preferably less than 0.020 cms in diameter. Rods 17 are spaced laterally from one another by 3 to 4 rod diameters which is sufficient to keep adjacent foil layers from touching. In this embodiment, rods 17 have a length of approximately 3.8 cms. As previously explained, both rods 17 and foil 15 may be coated or plated with a material selected to have an affinity for the sample material in the carrier fluid.

The embodiment shown in FIG. 3 may be constructed in several ways. For example, glass rods 17 may be affixed to the metal foil 15 with methyl cellulose prior to being wrapped around support rod 8 to form the spiral pattern. The heater element thus formed is then heated to evaporate the methyl cellulose.

Alternatively, rods 17 may be temporarily affixed to a temporary carrier which will maintain appropriate spacing during winding. After winding is complete, the temporary carrier may be cut away.

FIG. 5 shows an alternative embodiment of accumulator 1 in which housing 20 has an entrance opening 21 and an exit opening 22. In this alternative embodiment, substantially planar, rectangular high temperature insulating foils 24 have very thin conductive layers 25 deposited thereon. A heating power supply is then connectable across these conductive layers by electrical leads (not shown) to heat the layers when desired. The spacing between the foils permits fluid flow between the layers from entrance opening 21 to exit opening 22. In one embodiment, the spacing between foils is approximately 0.010 cms and is preferably less than 0.020 cms.

FIG. 6 shows a schematic diagram of a chemical analyzing apparatus 102 employing the sample accumulator of the present invention.

In the embodiment shown in FIG. 6, housing 2 contains heating element 3 which may be either the embodiment 3A shown in FIGS. 1 and 2 or the embodiment 3B shown in FIGS. 3 and 4. An additional outlet 25 is provided in housing 2. Outlet 25 is connected by tube 27 to an enrichment device 40 such as a prior art membrane separator of Llewellyn.

If enrichment device 40 is a membrane separator, it is connected via valve 46 to sampling pump 45; device 40 is also connected to fore pump 48, as is well known in the art. The enriched output of device 40 is supplied via tube 43 to chemical analyzer 50 which may be, for example, a mass spectrometer, which is connected, as is known in the art, to a high vacuum pump 52 and a fore pump 54.

The electrical output signal of chemical analyzer 50, which contains information for identifying the species of the sample molecules, is provided to detector and pre-amplifier 60 which detects and amplifies the output signal. The amplified signal is supplied to a signal processing and digitizing means 80 which may comprise a filter (not shown) and an analog-to-digital converter (not shown). The digital output of signal processing and digitizing means 80 is one input to computer 100. Computer 100 also provides signals, inter alia, for identifying the species of sample molecules by one or another of several well known algorithms. Computer 100 also controls and coordinates the operation of the entire chemical analyzing system shown in FIG. 6, although all control leads are not shown for the sake of simplicity. Computer 100 provides signals to electronic control means 70 which controls the operation of chemical analyzer 50. The structure and operation of chemical analyzer 50, detector and pre-amplifier 60, signal processing and digitizing means 80, electronic control means 70 and computer 100 are well known in the art and are therefore not further described here.

Computer 100 also provides signals to temperature controller 130 which controls the amount of current supplied to heating element 3 of sample accumulator 1 via electrical connections 10, 16 shown in FIG. 1. In this way the temperature of the heating foil, e.g. foils 11 or 15, is controlled, as well as the temperature of the high temperature insulating means, e.g. rods 17 or insulating spacer 5. In operation, the thermal time constant of heater element 3, i.e. the time required for the heater temperature to reach 90% of its selected value, is typically less than 1 second. The presence of fluid in the heater facilitates the achievement of uniform temperature between the heating foils and the eletrical insulating means.

The temperature to which the heater element 3 is driven is controlled by an input to computer 100. In operation, as is explained below, for many samples of interest in a gas phase carrier, it is necessary or desirable to select a temperature in the range between $200^\circ C$ and $350^\circ C$ and thus to accommodate these samples it is necessary to select a high temperature insulating material for rods 17 or spacer 5 that can withstand temperatures in this range without degrading. If the carrier fluid is a liquid, sample molecules are more suitably harvested by selecting a lower temperature.

Computer 100 also controls the operation of valve 92 to selectively connect: (1) the interior of housing 2 to pumping means 85 which draws carrier fluid containing the sample of interest through inlet opening 4 of housing 2 and then through heater element 3 and valve 92 and (2) the interior of housing 2 to reservoir means 90. Sampling pump 45 then draws a clean fluid of known composition from reservoir 90. This fluid flows through valve 92 and tube 93 back through heater element 3 to enriched sample outlet 25.

The chemical analyzing apparatus shown in FIG. 6 operates cyclically, each cycle comprising a first sample accumulation period and a second sample harvesting period.

To begin the operation of chemical analyzing apparatus 102 shown in FIG. 6, computer 100 causes inlet door 101 to open and controls valve 92 to connect the interior of housing 2 to pumping means 85 via tube 93. Pumping means 85 then draws carrier fluid and the sample therein through inlet opening 4. Carrier fluid thus flows through heater 3 and tube 93 to pumping means 85. During the accumulation period, while pumping means 85 is drawing carrier fluid through heater element 3, temperature controller 130 typically does not supply heating current to heater element 3, so that the carrier fluid flows through heater element 3 at ambient temperature. However, if desired, temperature controller may supply a current to heater element 3 to heat the surfaces thereof to a selected temperature T1.

As is clear from the dimensions of the heating elements given above, heating element 3 is constructed so that it has a large surface area contained in a small volume. For example, a model was constructed with the dimensions given in connection with the embodiment of FIG. 3. In this case, the volume occupied by heater element 3 is $\pi R^2 h = \pi(1.91cm)^2 (3.8cm) \approx 43.5 \ cms^3$. The surface area of the foil is given by $A = 2 \times h \times 1 = 2 \times (3.8cm) \times (91cm) = 692cms^2$.

The surface area of the rods 17, which also attract sample molecules, significantly increases the available surface area.

As the carrier fluid passes through heater element 3 at approximately ambient temperature (or temperature T1), a portion of the interesting sample molecules will be captured on active sites on the heater foil and spacer rods with sufficient partition energy to hold them there at that temperature. This preference for sample molecules over carrier molecules can be enhanced for certain sample molecules of interest by the appropriate choice of stationary phase coatings for the heater foil and insulating rods or spacer.

In the case where the carrier fluid is a gas or a liquid and the stationary phase is a solid, the physical basis of the preferential attachment is frequently termed adsorption. See, e.g., Snyder and Kirkland, supra, and Littlewood, supra. In the case where the carrier fluid is a gas or a liquid and the stationary phase is a liquid, the stationary phase acts as a solvent, and there are several interaction forces. See McNair and Bonelli, supra, at page 31.

Of importance, during the accumulation period, a relatively large volume of carrier fluid is drawn through heating element 3 so that even if the carrier fluid contains only a dilute concentration of the sample of interest, many sample molecules will be captured at the surface of the heater element by partition effects.

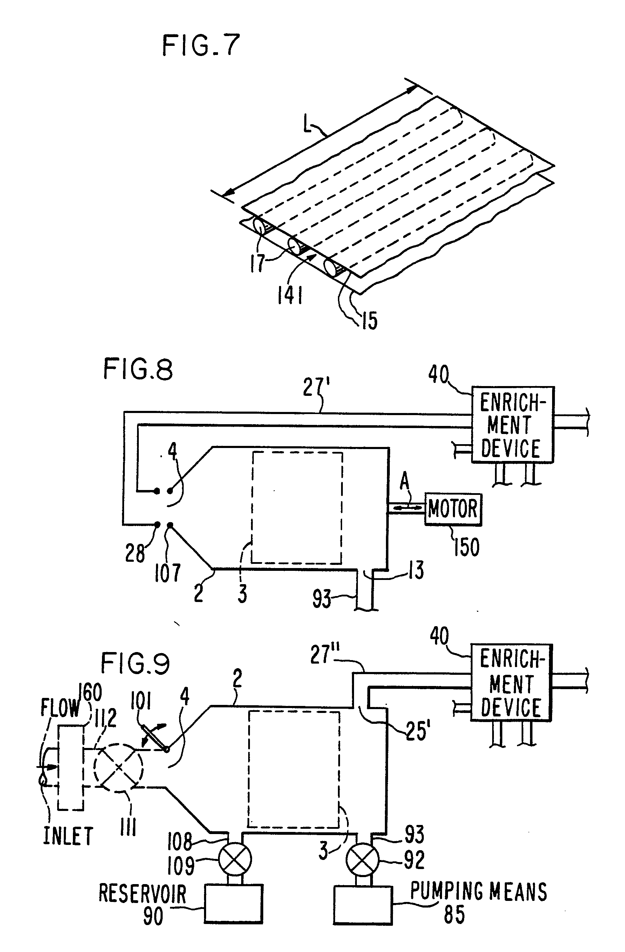

FIG. 7 shows an idealized diagram of a typical longitudinal channel 141 through adjacent rods 17 and adjacent foil elements 15 of heating element 3B. For each point in channel 141, the required diffusion distance R is always one-half or less of the spacing between the two adjacent conductor surfaces. In the case described above in connection with FIG. 3, where insulating rods 17 are approximately 0.010 cms in diameter, a sample molecule need only diffuse 0.005 cms to reach a surface where it can be captured. Since it is known that a molecule diffuses a distance R in a time T which is proportional to the square of R, it is desirable to allow sufficient time for the sample molecules of interest to diffuse to a nearby wall, and thus the importance of small spacings is evident.

In general, the velocity of carrier flow is given by $V = L/T$ where L = length of channel 141, T = transit time for fluid to flow the length of channel 141.

On the other hand, the time, $T_d$ for a molecule to diffuse a distance R is given by $T_d = dR^2$. Thus velocity V is controlled so that the transit time T is sufficiently long to allow a large percentage of molecules to diffuse to the surfaces of heater element 3 during the transit time T of the carrier fluid.

At the end of the accumulation period, computer 100 begins the harvesting period by closing inlet door 101 and activating temperature controller 130 to supply power to heater element 3 to heat heater element 3 to a prescribed temperature T2 (greater than ambient temperature) sufficiently high to overcome the capture forces between the sample molecules and the stationary phase so that the sample molecules are driven off the surfaces of the heater element and into the surrounding fluid (mobile phase). During the harvesting period, computer 100 also causes valve 92 to switch to a second position which connects the interior of housing 2 to reservoir 90 via tube 93 and valve 92. Sampling pump means 45 then draws a selected volume of clean fluid (i.e. one not containing sample molecules) of known composition from reservoir 90 back through heater element 3 to harvest the sample molecules driven off the heater surfaces by the energy supplied by heating element 3. Zero-air is frequently used as a clean fluid with gas carriers. This back flow, enriched with sample molecules, passes via outlet 25 and tube 27 to the second enrichment device 40. Computer 100 then causes apparatus 102 to repeat the cycle of accumulating and harvesting as many times as desired. Due to the short time constant of the heater element 3, short cycle times on the order of 6-10 seconds are possible with this invention, which is of considerable practical significance in those applications where the amount of sample present in the carrier may fluctuate rapidly as a function of time.

Conditioner 94, shown in FIG. 6, is optional, and includes heating and cooling means (not shown) to condition the temperature of the clean fluid to a selected temperature as the clean fluid flows therethrough.

If desired, the cycle controlled by computer 100 may include a third period following the harvesting period during which heater 3 is purged by clean fluid from reservoir 90 which may be pressurized.

Of importance, the volume $V_1$ of fluid which is pumped through heater element 3 during an accumulation period of a cycle is always substantially greater than the volume $V_2$ of the clean back flow fluid driven through heater 3 during the following harvesting period.

If all of the sample molecules in the carrier fluid flowing through heater element 3 attach to heater surfaces during the accumulation period and are driven off into the back flow during the harvesting period, then the enrichment ratio, which may be defined as the ratio of the density of molecules of the sample in the carrier fluid to the density of molecules of the sample in the back flow fluid is given by $V_1/V_2$. Thus, $V_1/V_2$ serves as an upper bound for the enrichment ratio of the sample accumulator of the present invention. The ratio $V_1/V_2$ is typically selected to be between 10 and 1000.

The above embodiments are intended to be exemplary and not limiting, and many modifications will be obvious to one of average skill in the art in light of the above disclosure. For example, as shown in FIG. 8, an embodiment which is the same as the one in FIG. 6 may be constructed except that housing 2 has only two openings: entrance opening 4 and exit opening 13. In this embodiment, housing 2 is movable (as indicated by arrow A) by motor 150 between a first position (shown in FIG. 8) in which end 107 of housing 2 is disengaged from end 28 of tube 27' for allowing carrier fluid to enter housing 2 and a second position (not shown) in which end 107 of housing 2 engages end 28 of tube 27' so that back flow fluid flows from tube 93 back through heater 3 to tube 27' and then to concentrating device 40.

The embodiment shown in FIG. 5 may also be used in the embodiment of FIG. 8.

Similarly, while the above embodiments employ back flow during the harvesting cycle, in another embodiment, shown in FIG. 9, forward flow during the harvesting cycle is employed. The embodiment shown in FIG. 9 is similar to that shown in FIG. 6 except that reservoir 90 is connected to housing 2 by a tube 108 and valve 109 added at the inlet end of heater element 3 and opening 25 and tube 27 are replaced by opening 25' and tube 27'' placed at the opposite end of heater element 3. In this embodiment, during the harvesting period of a cycle, clean fluid flows from reservoir 90 via valve 109 and tube 108 through heater element 3 to tube 27''. During the accumulation period, fluid flows through inlet 4 and heater 3 and through tube 93 and valve 92 to pumping means 85.

As also shown in FIG. 9, the carrier fluid may be preconditioned by optional preconditioner 160, which is connected to inlet 4 via tube 112 and valve 111. Preconditioner 160 may include means for heating or cooling the carrier fluid or for subjecting the fluid to chemical conditioning, for example, selective scrubbing of unwanted materials.

It should also be appreciated that enrichment device 40 is optional and if desired, tube 27 (FIG. 6) may be connected directly to chemical analyzer 50.

In many applications, the embodiments using back flow are preferable, since the species of sample molecules most strongly captured at the stationary phase tend to attach to the heater surfaces near the entrance to the heater and these species then have a short path out of the heater if back flow is employed.

If desired, the carrier fluid may be used during the harvesting cycle in place of the clean fluid.

As described above in respect of figures 3 and 4, the electrically insulating material comprises generally cylindrical rods, preferably of glass, and preferably having a diameter of less than .02cm. The layer of conductive metal foil wound in the spiral and separated by the insulating material preferably has a thickness of between .00625cms and .013cms.

The second volume V2 pumped through the passages of the heater during the second period is preferably pumped in the opposite direction to the direction of pumping the first volume during the first period. The pumping is preferably computer controlled. The heater is preferably adapted to heat the surfaces to a selected temperature less than 400°C and means may be provided for cooling the carrier fluid.

## Claims

1. A sample accumulator comprising:
a heater having passages for fluid extending therethrough, said passages comprising surfaces acting as a chromatographic stationary phase for capturing sample molecules from a carrier fluid;
means for pumping a first volume, $V_1$, of a carrier fluid in a first direction through said passages during a first period of a cycle and for pumping a second volume, $V_2$ less than $V_1$, of fluid through said passages during a second period of said cycle, said second period following said first period, said heater being controllable to heat said surfaces to a selected temperature during said second period to release captured sample molecules.

2. A sample accumulator as in claim 1 wherein said heater comprises layers of conductive metal foil separated by insulating material, said insulating material being selected to withstand temperatures of at least 200°C without degrading.

3. A sample accumulator as in claim 2 wherein said insulating material comprises glass.

4. A sample accumulator as in claim 1 wherein said heater comprises a layer of conductive metal foil wound in a spiral, the turns of said spiral being separated from one another by insulating material selected to withstand a temperature of at least 200°C without degrading.

5. A sample accumulator as in claim 1 including means for controlling said heater to heat said surfaces to a second selected temperature during said first period.

6. A sample accumulator as in claim 1 including means for conditioning the temperature of said second volume of fluid prior to its being pumped through said passages.

7. A sample accumulator as in claim 1 wherein said means for pumping include means for pumping a purge fluid through heater during a third period of said cycle.

8. A sample accumulator as in claim 1 further including means for preconditioning said carrier fluid prior to entering said passages of said heater.

9. A chemical analyzing apparatus comprising:
a sample accumulator as in claim 1;
chemical analyzer means for receiving said second volume, $V_2$, from said sample accumulator and for providing a signal including information for identifying the species of sample molecules in said carrier fluid.

10. A method of concentrating sample molecules comprising:
pumping a first volume, $V_1$, of a carrier fluid through passages of a heater, said passages comprising surfaces acting as a chromatographic stationary phase for capturing sample molecules from said carrier fluid in a first period of a cycle; and then
heating said heater to a selected temperature during a second period of said cycle to release captured sample molecules, said second period following said first period; and
pumping a second volume, $V_2$ less than $V_1$, of fluid through said passages during said second period of said cycle.

FIG.2

FIG.1

FIG.3

FIG.4

FIG.5

FIG.6

EP 0 337 666 A2

# FIG.7

# FIG.8

# FIG.9